# EUROPÄISCHE PATENTSCHRIFT

(11) **EP 4 205 603 B1**
(45) Veröffentlichungstag und Bekanntmachung des Hinweises auf die Patenterteilung: **06.11.2024**
(21) Anmeldenummer: 23158402.0
(22) Anmeldetag: 10.01.2019
(51) Int. Cl.: A47B 77/16, A47B 88/919, A47B 77/08, F25D 25/02, A47B 88/90

(54) **DECKEL FUR EINE SCHUBLADE UND VAKUUMSCHUBLADENEINRICHTUNG MIT EINEM DECKEL**
LID FOR A DRAWER AND VACUUM DRAWER DEVICE WITH A LID
COUVERCLE POUR TIROIR ET DISPOSITIF DE TIROIR À VIDE DOTÉ D'UN COUVERCLE

(30) Priorität: 18.01.2018 CH 542018
(43) Veröffentlichungstag der Anmeldung: 05.07.2023
(62) Teilanmeldung aus: 19700658.8
(73) Patentinhaber: Julius Blum GmbH, 6973 Höchst (AT)
(72) Erfinder: BERTSCHI, Daniel, 6284 Gelfingen (CH)
(74) Vertreter: Torggler & Hofmann Patentanwälte - Innsbruck

(56) Entgegenhaltungen:
- EP-A2- 1 790 270
- CH-A2- 713 601
- DE-U1- 202017 006 169
- JP-A- H03 170 107
- US-A- 5 806 575
- SUNUV: "SUNUV S2 Sterilizer Storage Box", 1 April 2018 (2018-04-01), pages 1 - 1, XP093048025, Retrieved from the Internet <URL:https://www.facebook.com/watch/?v=577318885973107> [retrieved on 20230519]

## Beschreibung

### Technisches Gebiet

Die vorliegende Erfindung beschreibt einen Deckel zum Einbau in einen Schubladenkorpus, welcher mit einer linear bewegbare Schublade wirkverbindbar anordbar ist, wobei der Deckel zur Evakuierung mindestens eines Schubladeninnenraums mittels Evakuiermitteln geeignet ist, sodass der mindestens eine Schubladeninnenraum bei in einer Geschlossenstellung befindlichen Schublade evakuiert und vor Öffnung der Schublade belüftbar ist, eine Vakuumschubladeneinrichtung sowie ein Umrüstverfahren eines Schubladenkorpus mit einer Schublade, wobei die Schublade linear mittels eines Schubladenauszugs in einer Schubbewegungsrichtung bewegbar gelagert ist.

### Stand der Technik

Gegenwärtig werden in den Privathaushalten der Industrieländer schnell verderbliche Lebensmittel im Kühlschrank aufbewahrt. Der Kühlschrank hat den Vorteil, die Innentemperatur senken zu können, um dadurch das Wachsen von zerstörenden Bakterienkulturen zu verzögern. Auch kann der Kühlschrank als abgeschlossener Aufbewahrungsort für Lebensmittel angesehen werden, der im geschlossenen Zustand verhindert, dass ungewollte Einflüsse, wie z.B. Insekten oder Pollen, die Qualität der Lebensmittel negativ beeinflussen.

Weiter hat der Kühlschrank doch einige Nachteile, da er durchgehend Strom benötigt, um über einen Kompressor Kälteenergie zu erzeugen. Parallel entsteht Abwärme, die hinter dem Kühlschrank an die Umgebungsluft abgegeben und mittels Lüftungsschlitzen bei den

Küchenblenden in den Raum geführt wird, was im Sommer nicht erwünscht ist.

In den letzten Jahrzehnten haben die Kühlschränke unsere Umwelt so stark negativ belastet, dass die Weltgemeinschaft einschreiten musste, um das ozonschädliche Kältemittel FCKW zu verbieten. Weitere Umweltprobleme stellen die ab 1990 verwendeten Schäumungsmittel zur Dämmung des Kühlschrankes dar. Die negativen Auswirkungen auf die Umwelt bei der Herstellung, des Betriebes und der Entsorgung der Kühlschränke konnte die Internationale Gemeinschaft auf Druck der Umweltverbände in den letzten Jahren immer mehr eingrenzen, aber nicht verhindern. Weniger Beachtung fand bisher das Innenklima des Kühlschrankes. Gemäss einer Untersuchung des Hygiene Council, welche eine internationalen Studie namens Hygiene Report 2010 durchgeführt hat, ist der Kühlschrank mit rund 1G400'O00 Keime pro Quadratzentimeter mehr belastet, als die Toilette mit rund 100 Erreger pro Quadratzentimeter. Diese Meldung 2010 fand ein grosses Medienecho, doch ausser Empfehlungen, den Kühlschrank öfter zu reinigen, fanden bis jetzt keine wahrnehmbaren Verbesserungen statt. Die Anzahl der Keime sind nicht zwingend das Problem, da es vielmehr darauf ankommt, welche Keime für den Menschen am schädlichsten sind. Jean-Pierre Hugot vom Pariser Höpital Robert Debre hat die klimatischen Verhältnisse innerhalb des Kühlschrankes untersucht. Nach seinen Angaben fühlen sich die "kälteliebenden" Mikroben wie Yersilinen und Listerien, im Kühlschrank sehr wohl. Möglicherweise können diese Mikroben die Verdauungskrankheit Morbus Crohn verursachen.

Auf Wikipedia steht am 22.10.16, nach der Erwähnung des Forschungsergebnisses von Jean-Pierre Hugot, folgender Satz: "Der Verzehr verdorbener Speisen wegen Verzicht auf die Kühlung, dürfte allerdings mit größeren Krankheitsrisiken behaftet sein." Dem Satz zufolge ist die Kühlung der Lebensmittel in einem Kühlschrank gerade mal etwas gesünder, als verdorbene Nahrung zu sich zu nehmen.

Die US 5 806 575 A, die CH 713 601 A2, die DE 20 2017 006 169 U1, die EP 1 790 270 A2 sowie die JP H03 170107 A stellen einen allgemeinen Stand der Technik dar.

Ziel der Erfindung ist daher, einen Aufbewahrungsort für Lebensmittel zu entwerfen, der auf Kühlung verzichten kann und trotzdem die Lebensmittel in einem möglichst langen Zeitraum nicht verderben lässt. Eine gebräuchliche Art, Lebensmittel ohne Kühlung frisch zu halten ist die Vakuumverpackung. Diese hat sich vor allem im hygienisch sensiblen Bereich der Fleischprodukte durchgesetzt. Gemäss Wikipedia am 22.10.16 versteht man unter einer Vakuumverpackung Folgendes: "Eine Vakuumverpackung ist eine gasdichte Verpackung eines Produktes, in dem Zwischenräume und damit reaktionsfähige Gase innerhalb des Produktes weitgehend entfernt wurden. Wichtig ist vor allem der Entzug von Sauerstoff aus der Verpackung." Weiter:"Diese Verpackungsart hat mehrere Vorteile. Wie bei der Schutzgasverpackung sind die Produkte länger haltbar, da kein Sauerstoff an die Produkte gelangt, der durch chemische Reaktionen oder biologische Prozesse im Laufe der Zeit zur Unbrauchbarkeit der Produkte führt."

Da die Vakuumverpackungen aus Kunststofffolien bestehen, müssen diese Folien bei einem Hersteller bezogen und nach Gebrauch wieder entsorgt werden. Die Entsorgung der Kunststofffolien erfolgt in der Regel durch Verbrennung, welche wiederum die Umwelt belastet.

Auch nicht für jedes Lebensmittel bietet sich der Kühlschrank als Platz an zur Lagerung. Tomaten, Basilikum, Brot, Avocado, Kartoffeln etc. sollte man besser nicht im Kühlschrank lagern.

### Darstellung der Erfindung

Die vorliegende Erfindung hat sich zur Aufgabe gestellt die Möglichkeit zu schaffen, bestehende Schubladen mit einfachen Mitteln, kostengünstig als evakuierbare Schubladen einer Vakuumschubladeneinrichtung auszugestalten. In derartigen Vakuumschubladeneinrichtungen sind Lebensmitteln evakuiert lagerbar, wobei die äußere Erscheinung eines Schubladenkorpus bekannter

Schubladenkorpusse unverändert bleibt und die Schublade einfach und schnell umrüstbar ist.

Diese Aufgabe wird mit einem Deckel gemäß Anspruch 1 gelöst. Der Deckel kann einfach in eine Schubladeneinrichtung integriert werden und umfasst die zur Evakuierung notwendigen Bauteile.

Nicht zwingend zu kühlende Lebensmittel können in einer Vakuumschubladeneinrichtung bei Raumtemperatur gelagert werden, wobei auf einen erhöhten Energieverbrauch zur Kühlung verzichtet wird. Lebensmittel können so auf vereinfachte Weise länger verzehrbar oder genießbar gehalten werden.

Durch die Verlagerung der Lebensmittel, die nicht unbedingt Kälte benötigen, in den Schubladenkorpus mit Vakuumschubladeneinrichtung, entsteht mehr Platz im Kühlschrank bzw. es müssen nicht immer größere und dadurch umweltschädlichere Kühlschränke eingesetzt werden.

Die Lagerung im Schubladenkorpus mit Vakuumschubladeneinrichtung benötigt weniger Energie als der Kühlschrank, da der Sauerstoffentzug im Innern nach wenigen Minuten abgeschlossen ist und danach keine weitere Elektrizität benötigt wird. Die Lebensmittel in der Vakuumschubladeneinrichtung bleiben frisch, da ein Feuchteentzug über die Umgebungsluft verhindert wird. Wenn die Umgebungsluft feuchter ist als die Lebensmittel, wie z.B. Kekse, können diese in der Vakuumschubladeneinrichtung vor Feuchtigkeit geschützt werden.

Eine Vakuumschubladeneinrichtung lässt sich umsetzen ohne schädliche Materialien wie Kältemittel oder Wärmedämmung.

Der Verbrauch von Kunststoffbeuteln bei der Vakuumierung kann signifikant reduziert werden.

Bei bestehenden Küchen, welche vor allem im Mietbereich kleine Kühlschränke haben, bietet sich eine Umrüstung von bestehenden Schubladenkorpussen auf Vakuumschubladeneinrichtungen an. Eine bestehende Schublade kann schnell und einfach umgerüstet werden.

Durch die erwähnten Verbesserungen können Lebensmittel einfacher, umweltfreundlicher und energieeffizienter gelagert werden. Dies wirkt sich positiv auf die Qualität der Lebensmittel und die Gesundheit der Verbraucher aus. Es würden auch weniger Lebensmittel weggeworfen, da deren Qualität länger erhalten werden kann.

### Kurze Beschreibung der Zeichnungen

Bevorzugte Ausführungsbeispiele des Erfindungsgegenstandes werden nachstehend im Zusammenhang mit den anliegenden Zeichnungen beschrieben.
Figur 1 zeigt eine perspektivische Ansicht einer Vakuumschubladeneinrichtung in einem Schubladenkorpus bei offener Schublade.
Figur 2 zeigt einen teilweise schematisch dargestellten Längsschnitt durch eine Vakuumschubladeneinrichtung in einem Schubladenkorpus bei geschlossener Vakuumschubladeneinrichtung.
Figur 3 zeigt einen teilweise schematisch dargestellten Längsschnitt durch einen Schubladenkorpus mit halb herausgezogener Schublade.
Figur 4 zeigt einen teilweise schematisch dargestellten Querschnitt durch einen Schubladenkorpus mit geschlossener Schublade.
Figur 5a zeigt einen teilweise schematisch dargestellten Längsschnitt durch eine abgewandelte Vakuumschubladeneinrichtung in einem Schubladenkorpus bei geschlossener Vakuumschubladeneinrichtung, während
Figur 5b einen teilweise schematisch dargestellten Längsschnitt gemäß Figur 5a mit belüfteter Schublade, also geöffneter Vakuumschubladeneinrichtung zeigt.

### Beschreibung

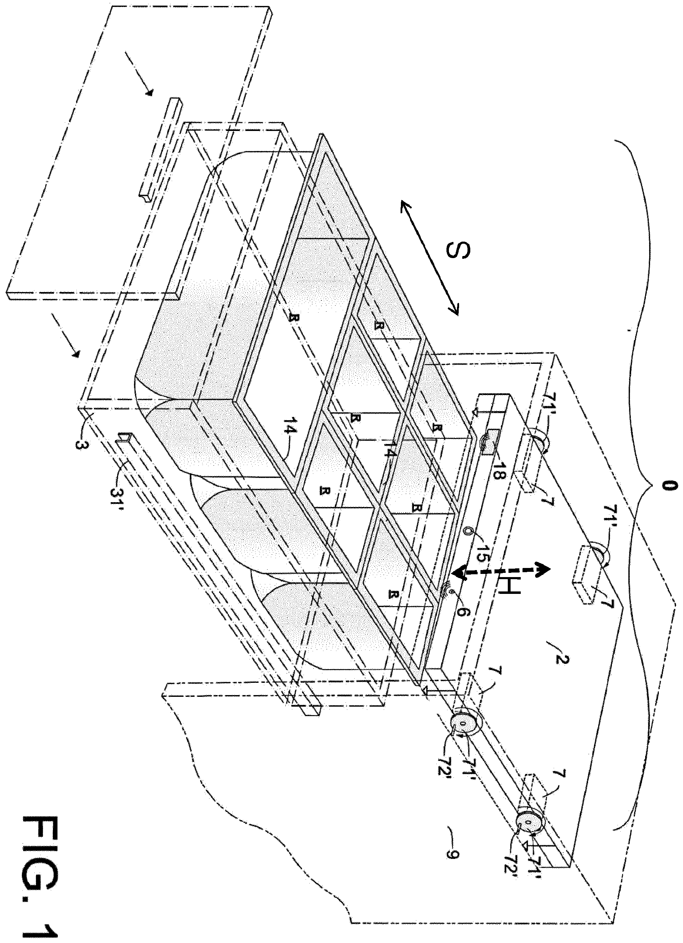

Im Folgenden wird eine Ausführungsform einer Vakuumschubladeneinrichtungen 0 anhand der Figuren 1 bis 4 beschrieben. Wie in Fig. 1 dargestellt, umfasst eine Vakuumschubladeneinrichtung 0 eine Schublade 3, welche gestrichelt gezeichnet ist und einen Deckel 2. Die gesamte Vorrichtung wird hier Vakuumschubladeneinrichtung 0 genannt und umfasst die Schublade 3, die mit dem Deckel 2 wirkverbindbar ist und innerhalb eines Schubladenkorpus 9 linear bewegbar gelagert ist. Der Schubladenkorpus 9 bildet die äußere Hülle, in welcher der Deckel 2 und die Schublade 3 bewegbar geschützt gelagert sind.

Ein Teil der vorliegenden Erfindung ist die Möglichkeit eine gewöhnliche Schublade 3, welche Wände und einen Schubladeninnenraum R umfasst und in einem gewöhnlichen Schubladenkorpus 9 in einer linearen Schubbewegungsrichtung S auf und zu bewegbar gelagert ist, evakuierbar auszugestalten. Hier ist die Schublade 3 in einem Schubladenauszug 31' linear bewegbar gelagert.

Da Mittel zur Lagerung der Schublade 3 von handelsüblichen Schubladen bekannt sind, ist hier schematisch der Schubladenauszug in Form des Führungsprofils 31' beispielhaft dargestellt, mit welchem die Schublade 3 gehalten wird und in eine Offenstellung und eine Schließstellung bringbar ist.

In der einfachsten Variante ist der einteilige Schubladeninnenraum R, welcher von den Wänden der Schublade 3 begrenzt wird, evakuierbar.

Hier ist eine besondere Ausführungsform des Schubladeninnenraums R ausgestaltet, da dieser evakuierbare Schubladeninnenraum R von einer Mehrzahl von Behältern 14 gebildet ist, wobei die Behälter 14 innerhalb der Schublade 3 positioniert angeordnet sind und jeweils die gleiche Höhe aufweisen, jedoch verschiedene Größen. Bevorzugt sind die Behälter 14 als Gastronormbehälter ausgebildet, deren Innenräume den gesamten Schubladeninnenraum R bilden können, welcher mittels Deckel 2 verschließbar und evakuierbar ist. Die Behälter 14 sind in der Schublade 3 gelagert und sind mit der Schublade 3 mitbewegbar, können aber auch entnommen werden.

Der Kernpunkt zur Evakuierung des Schubladeninnenraums R ist der bewegbar innerhalb des Schubladenkorpus 9 angeordnete Deckel 2, welcher luftdicht ausgestaltet ist und in einer Hubrichtung H senkrecht zur Schubbewegungsrichtung S auf die Schublade 3 absenkbar gelagert ist.

Am oder im Deckel 2 und innerhalb des Schubladenkorpus 9 sind Hubmittel 7 angeordnet, welche den Deckel 2 innerhalb des Schubladenkorpus 9 in Hubrichtung H bewegbar halten. Mit einer, der Schublade 3 zugewandten Deckelseite kann der Deckel 2 auf die Wände der Schublade 3 respektive auf Ränder der Behälter 14 aufgesetzt werden, wodurch der mindestens eine Schubladeninnenraum R verschließbar ist. Der Deckel 2 ist relativ zum Schubladenkorpus 9 und zur Schublade 3 bewegbar gelagert. Das Verschließen findet nur bei Geschlossenstellung der Schublade 3 statt, bei Offenstellung der Schublade 3 gemäß Figur 1 gibt der Deckel 2 die Schublade 3 vollständig frei.

Als Hubmittel 7 sind hier mehrere Servomotoren 7 am Deckel 2 wirkverbunden mit Hubmitteln innerhalb des Schubladenkorpus 9 befestigt. Drehbare Servoscheiben 71' sind jeweils über eine Schraube mit Lagerhülse 72' innerhalb des Korpus 9 so gehalten, dass der Deckel 2 von der Schublade 3 bzw. den Behältern 14 entgegengesetzt gesteuert anhebbar und auf diese absenkbar angeordnet ist.

Damit entsteht die Hubbewegung des Deckels 2 in Hubrichtung H senkrecht zur Schubbewegungsrichtung S der Schublade 3. Da der mindestens eine Behälter 14 einen umlaufenden Flansch 140 aufweist, kann der Deckel 2 plan auf dem Rand des Behälters 14 und damit auf dem Flansch 140 aufliegen. Ein luftdichter Abschluss ist somit vereinfacht möglich.

Die Behälter 14 innerhalb der Schublade 3 der Vakuumschubladeneinrichtung 0 können gegenüber gebräuchlichen Schubladen gegen oben abgeschlossen werden, indem der Nutzer von Hand, die Schublade 3 schließt und sich der Deckel 2 in der Geschlossenstellung der Schublade 3 auf die Behälter 14 herabsenkt und diese von oben luftdicht abschließt. An der Vorderseite des Deckels 2 sind ein Geschlossenstellungssensor 6, ein Bedienschalter/An- und Ausschalter 15 und ein Näherungssensor 18 angebracht.

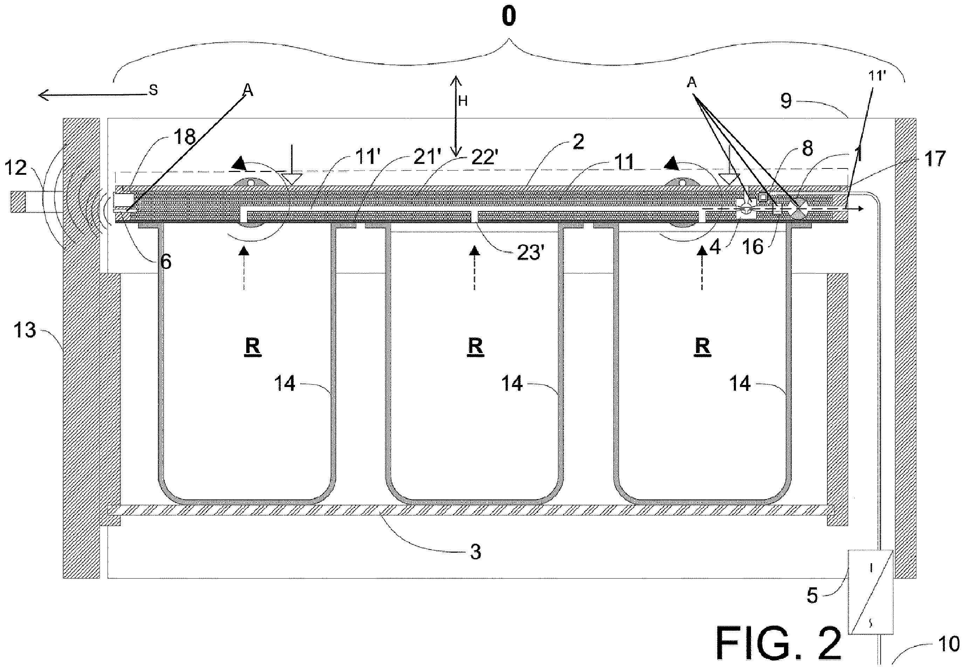

Wie in Figur 2 dargestellt befinden sich die Behälter 14 während der Geschlossenstellung der Schublade 3 innerhalb des Schubladenkorpus 9 wobei der Deckel 2 in dieser Situation auf den Behältern 14 aufliegt und dadurch die Behälterinnenräume R von oben luftdicht abschließt.

Der Deckel 2 ist derart profiliert ist, das Evakuiermittel in Form einer Steuerung 8, einer Pumpe 1, eines Drucksensors 16 und eines Ventils 4 in mindestens einer Aussparung A im Deckel 2 integriert befestigt sind. Der profilierte Deckel 2 bildet einen Rahmen 17 für die Evakuiermittel.

Der Deckel 2 umfasst hier beispielhaft die Profilierung bzw. den Rahmen 17 und eine Schaumstofflage 22'. Der Deckel 2 kann aber auch einstückig aus einem Material hergestellt sein. Auf der unteren Seite, den Behältern 14 zugewandt ist eine luftdichte Membran 21' angeordnet. Durch die luftdichte Membran 21' welche mittels Deckel 2 auf die Öffnung der Schublade 3 bzw. auf die Öffnungen der Behälter 14 aufgesetzt wird, kann der Behälterinnenraum R luftdicht verschlossen werden.

Die luftdichte Membran 21' weist zu jedem Behälterinnenraum R eine Lufteinlassöffnung 23' auf. Diese Lufteinlassöffnung 23' führt entweder direkt zu einem Luftkanal 11' oder durch die Schaumstofflage 22' indirekt zu einem Luftkanal 11'. Der Luftkanal 11' quert den Deckel 2 mindestens teilweise und führt aus dem Deckel 2 heraus. Der Luftkanal 11' ist mit mindestens einer Lufteinlassöffnung 23' verbunden, sodass Luft von der Lufteinlassöffnung 23' durch den Luftkanal 11' aus dem Deckel 2 heraus führbar ist. Luft kann mittels Evakuiermitteln aus mindestens einem Behälterinnenraum R durch den Deckel 2 in den Innenraum des Schubladenkorpus 9 gepumpt werden.

Hier ist jeweils eine Lufteinlassöffnung 23' in jeden Behälterinnenraum R bzw. Schubladeninnenraum R führend, die luftdichte Membran 21' querend angeordnet, sodass bei abgesenktem Deckel 2 jeder Behälter 14 evakuierbar ist.

Um Luft durch den Luftkanal 11' zu entnehmen ist der Luftkanal 11' mit dem Deckelinneren bzw. Aussparungen A verbunden, in welchen die Evakuiermittel angeordnet sind. Hier sind die Steuerung 8, die Pumpe 1, der Drucksensor 16 und das Ventil 4 jeweils in einer Aussparung A im Deckel 2 bzw. in einer Aussparung in der Schaumstofflage 22' angeordnet. Die Pumpe 1 ist mit dem Luftkanal 11' verbunden, sodass Luft aus dem Behälterinnenraum R durch die Lufteinlassöffnung 23', die luftdichte Membran 21' durch die Schaumstofflage 22' und den Luftkanal 11' ausgepumpt werden kann.

Wenn der Deckel 2 auf der Schublade 3 bzw. auf den Behältern 14 aufgesetzt wurde, wird Luft aus dem mindestens einen Schubladeninnenraum R durch den Luftkanal 11' gesteuert durch die Steuerung 8 abgepumpt. Der Deckel 2 ist durch Integration der Bauteile sehr kompakt ausgestaltet und es führen lediglich Steuerkabel 11 durch den Deckel 2 bzw. die Schaumstofflage 22' und ein Kabel vom Deckel 2 weg in ein Netzgerät 5.

Bevorzugt ist das Ventil 4 als Elektromagnetventil 4 ausgebildet. Der Deckel 2 ist insbesondere aus einer formstabilen Faserplatte, bevorzugt aus einer MDF-Platte (mitteldichte Holzfaserplatte) mit luftdichter Beschichtung, insbesondere eines Lackes, ausgebildet.

Optional kann mindestens ein Drucksensor 16 angeordnet sein, auf dessen Signal die Steuerung 8 die Evakuierung regelt. Dieser Drucksensor 16 ist hier ebenfalls in einer Aussparung A angeordnet, innerhalb des Luftkanals 11'.

Die elektronischen Geräte 1, 4, 6, 7, 8, 16, 18 sind über das mindestens eine Steuerkabel 11 elektrisch verbunden. Jede Lufteinlassöffnung 23' ist über den mindestens einen Luftkanal 11' mit der Pumpe 1, dem Elektromagnetventil 4 und dem Drucksensor 16 verbunden. Innerhalb und nahe bei der Rückwand des Schubladenkorpus 9, außerhalb des Deckels 2 und der Schublade 3 befindet sich das Netzgerät 5, welches über das Stromkabel 10 mit dem Deckel 2 verbunden ist und die elektronischen Geräte mit Strom versorgt. Auf einer Frontblende 13, welche die Schublade 3 in Öffnungsrichtung abschließt, befindet sich auf der Außenseite ein Griff 12 und auf Vorderseite des Deckels 2, zum Griff 12 ausgerichtet, der Näherungssensor 18 und der Geschlossenstellungssensor 6.

Der benötigte Strom wird dem Deckel 2 bzw. den Geräten im Schubladenkorpus 9 zur Steuerung des Vakuums im Behälterinnenraum R zugeführt, indem der Deckel 2 mittels Stromkabel 10 verbunden ist, welches wiederum mit dem Netzgerät 5 verbunden ist. Das Netzgerät 5 wandelt die Netzspannung mit Wechselstrom in die benötigte Gleichspannung um. Die Gleichspannung wird der Steuerung 8 zugeführt.

Die Steuerung 8 kann mittels Näherungssensor 18 erkennen, ob die Schublade 3 offen oder geschlossen ist. Der Näherungssensor 18 ist mit der Steuerung 8 über das Steuerkabel 11 verbunden. Der Näherungssensor 18 ist am oder im Deckel 2, bevorzugt im Deckelinneren bzw. in der mindestens einen Aussparung A, einer Frontseite der Schublade 3 zugewandt angeordnet, sodass eine Berührung der Schublade 3 erkennbar ist und das Vakuum im mindestens einen Schubladeninnenraum R gezielt steuerbar auflösbar ist. Bevorzugt ist der Näherungssensor 18 als kapazitiver Sensor ausgebildet.

Weiter überwacht die Steuerung 8 mittels Drucksensor 16 den Innendruck im mindestens einen Behälterinnenraum R der Schublade 3. Zusätzlich übernimmt die Steuerung 8 die Regelung der Vakuumpumpe 1 und des Elektromagnetventils 4. Durch einen mit der Vakuumpumpe 1 verbundenen Luftschlauch bzw. dem Luftkanal 11' wird die Luft, welche der Schublade 3 entzogen wurde, an die Umgebung abgegeben, was mit einem gestrichelten Pfeil in Figur 2 gekennzeichnet ist.

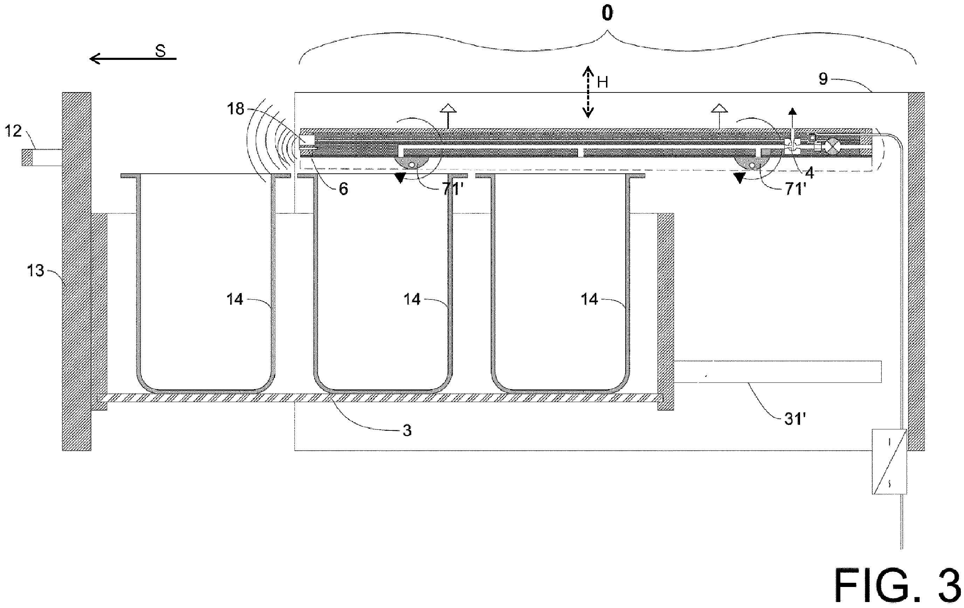

Figur 3 stellt die Vakuumschubladeneinrichtung 0 aus Figur 2 in der Offenstellung dar. Die Schublade 3 wird durch den Nutzer wie bekannte Schubladen linear in Schubbewegungsrichtung S aus dem Schubladenkorpus 9 geführt in dem er mit der Hand am Griff 12 zieht und die mittels Führungsschienen 31' bewegbar gelagerte Schublade 3 mit den Behältern 14 aus dem Schubladenkorpus 9 zieht. In Offenstellung der Schublade 3 ist das Vakuum gebrochen und der Behälterinnenraum R unter Umgebungsbedingungen, bei Raumtemperatur und aktuellem Luftdruck oder Atmosphärendruck am Ort der Schublade 3.

Damit die Schublade 3 herausgezogen werden kann, muss der Deckel 2 bzw. der Behälterinnenraum R vorgängig belüftet werden. Mittels Näherungssensor 18 wird die Näherung des Benutzers erkannt und ein entsprechendes Signal wird über das Steuerungskabel 11 an die Steuerung 8 weitergeleitet. Anschließend öffnet die Steuerung 8 das Ventil 4 und Umgebungsluft wird in die Behälter 14 zum Auflösung des Vakuums eingelassen. Durch den Luftkanal 11' strömt Luft in den mindestens einen Behälterinnenraum R ein.

Danach wird der Deckel 2 in der Hubrichtung H von den Rändern der Behälter 14 durch die Steuerung 8 gesteuert mittels der Hubmittel 7 angehoben. Diese vertikale Bewegung des Deckels 2 erfolgt durch die Servoscheiben 71'.

Der Nutzer kann mittels Bedienschalter 15 der sich Innerhalb des Deckels 2 auf der Frontblende 13 zugewandten Seite befindet, die elektronischen Geräte im Deckel 2 ein- und ausschalten. Je nachdem, ob die Evakuierfunktion weiterhin gewünscht ist.

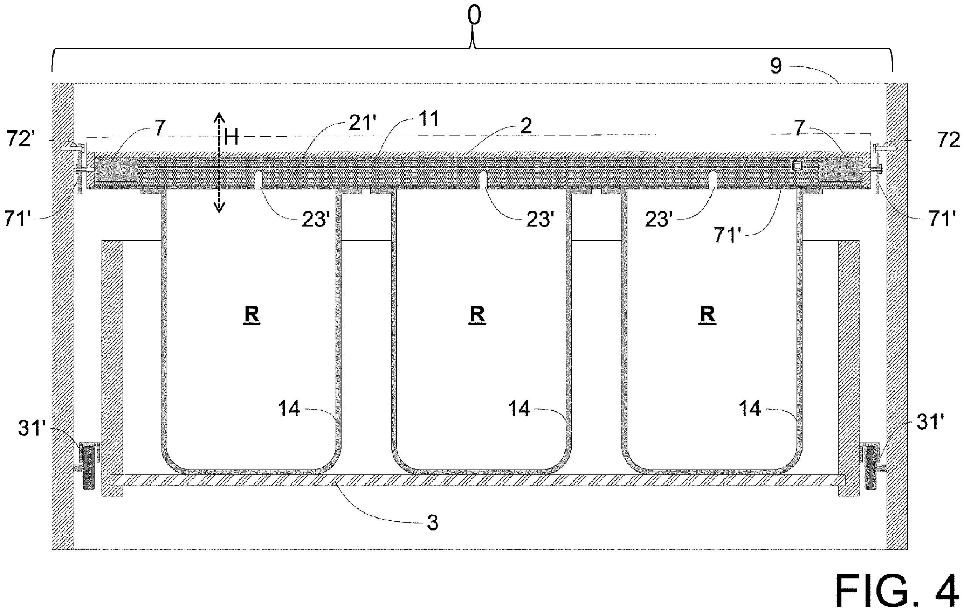

Figur 4 stellt einen Querschnitt der Vakuumschubladeneinrichtung 0 auf der Höhe der Servomotoren 7 in der Geschlossenstellung der Schublade 3 dar. Der Deckel 2 befindet sich über den Behältern 14 und wird durch die Servomotoren 7 über die Servoscheibe 71' die über Schrauben mit Lagerhülsen 72' mit dem Korpus 9 verbunden ist, auf die Öffnungen der Behälter 14 gedrückt, dadurch schließt die Luftdichte Membran 21' den Schubladeninnenraum R bzw. die Behälterinnenräume R luftdicht ab. Die Behälterinnenräume R können über die Lufteinlassöffnungen 23' evakuiert werden. Die Servomotoren 7 sind mittels Steuerkabel 11 mit der Steuerung 8 verbunden.

Damit die Schublade 3 geöffnet werden kann bestromt die Steuerung 8 über die Steuerkabel 11 die Servomotoren 7, dadurch drehen sich die Servoscheiben 71' und heben den Deckel 2 vertikal von den Behälter 14 ab. Die Schublade 3 kann mittels Schubladenauszügen 31' geöffnet werden.

Durch Anordnung der Schaumstofflage 22' unterhalb der luftdichten Membran 21' bzw. zwischen luftdichter Membran 21' und dem Profil des Deckels 2, ist eine plane luftdichte Auflage zur den Rändern der Behälter 14 gesichert. Luft kann dann nur durch die mindestens eine

Lufteinlassöffnung 23', durch die Schaumstofflage 22' und bis durch den Luftkanal 11' aus dem von der luftdichten Membran 21' und dem Deckel 2 luftdicht verschlossenen mindestens einen Schubladeninnenraum R herausgepumpt werden.

### Wege zur Ausführung zur Erfindung

Die hier vorgestellte Vakuumschubladeneinrichtung 0, wie in den Figuren 1 bis 4 dargestellt, schützt den Inhalt, wie z.B. Nahrungsmittel vor Umwelteinflüssen, indem der Inhalt in dem Schubladeninnenraum R luftdicht abgeschlossen wird, wodurch ein Luftaustausch verhindert wird.

Es wird ein Unterdrück bzw. ein Vakuum im Schubladeninnenraum R im Bereich von ca. 0-300 hPa erzeugt, welches deutlich unterhalb des normalen Luftdruckes der Umgebung von etwa 1000 hPa liegt.

Zum Betrieb der Vakuumschubladeneinrichtung 0, notwendig ist elektrische Energie, welche wie in Fig. 1-4 dargestellt über das Netzkabel 10 dem Netzgerät 5 zugeführt wird. Das Netzgerät 5 wandelt die Wechselspannung in Gleichspannung um und führt diese der Steuerung 8, der Vakuumpumpe 1 und den Elektromagnetventilen 4 mittels Steuerkabel 11 zu. Die Steuerung 8 ist direkt über die Steuerkabel 11 mit dem Näherungssensor 18 und dem Drucksensor 16 verbunden.

Befindet sich die Vakuumschubladeneinrichtung 0 wie in Figur 2 dargestellt im geschlossenen, betriebsbereiten evakuierten Zustand, liegt der Deckel 2 auf den Behältern 14 auf und schließt diese luftdicht ab.

Erst wenn die Schublade 3 in eine Geschlossenstellung in der Vakuumschubladeneinrichtung 0 gebracht ist, soll die Evakuierung stattfinden. Dass die Schublade 3 geschlossen wurde, wird mittels Geschlossenstellungssensor 6 erkannt und dann über Steuerkabel 11 an die Steuerung 8 weitergeleitet. Die Steuerung 8 setzt die Pumpe 1 in Betrieb, welche dann die Behälterinnenräume R über die Lufteinlassöffnungen 23' und den Luftkanal 11' evakuiert, wobei die Luft in den Innenraum des Korpus 9 strömt. Der Drucksensor 16 registriert wenn der erforderliche Unterdrück von rund 200 hPa erreicht wird und unterbricht den Stromkreis der Pumpe 1 die den Betrieb einstellt. Die Produkte und Lebensmittel die sich innerhalb der Behälter 14 befinden können nun luftdicht gelagert werden.

Möchte nun ein Nutzer die Vakuumschubladeneinrichtung 0 bzw. die evakuierte Schublade 3 öffnen, so berührt er mit der Hand die Frontblende 13 in der Nähe des Wirkkreises des Näherungssensors 18. Die registrierte Berührung leitet der Näherungssensor 18 über die Steuerkabel 11 an die Steuerung 8 weiter. Diese setzt wiederum die Pumpe 1 außer Betrieb und öffnet das Elektromagnetventil 4 welches den Luftkanal 11' mit der Umgebungsluft verbindet, sodass das Vakuum aufgelöst wird. Danach regelt die Steuerung 8 die Servomotoren 7 welche die Servoscheiben 71' drehen lassen so dass sich der Deckel 2 von den Behälter 14 in einer Hubbewegung in Hubrichtung H abhebt. Wie in Figur 3 dargestellt wird die Schublade 3 wie eine gewöhnliche Schublade durch lineares Aufziehen in Schubbewegungsrichtung S geöffnet.

Die Schublade 3 und deren Behälter 14 können nun sicher entnommen oder wieder platziert werden.

Schließt der Nutzer die Schublade 3 registriert der Geschlossenstellungssensor 6 die Geschlossenstellung der Schublade 3 indem er die Verkürzung der Distanz zur Frontblende 13 erkennt und das Signal über die Steuerkabel 11 an die Steuerung 8 weiterleitet. Die Steuerung 8 steuert die Servomotoren 7 an, welche durch eine Drehbewegung der Servoscheiben 71' zur Absenkung des Deckels 2 auf die Behälter 14 führt. Die Luftdichte Membran 21' schließt die Behälter 14 gegen oben luftdicht ab. Die Steuerung 8 setzt die Pumpe 1 in Betrieb welche die Luft aus den Behältern 14 über die Lufteinlassöffnung 23' und den mindestens einen Luftkanal 11' absaugt und an die Umgebung abgibt. Sobald der gewünscht Unterdrück erreicht wird, sendet der Drucksensor 16 das Signal an die Steuerung 8, welche die Pumpe 1 abstellt und das Elektromagnetventil 4 schließt, damit die Umgebungsluft nicht in die Behälter 14 eindringen kann. Der Unterdrück schützt nun den Inhalt im mindestens einen Behälterinnenraum R der Vakuumschubladeneinrichtung 0.

Der Nutzer kann über den Bedienschalter 15 die Elektronik der Vakuumschubladeneinrichtung 0 bei Bedarf außer Betrieb setzen.

Als Hubmittel 7, welche im Deckelinneren bzw. in der mindestens einen Aussparung A integriert sind und mit Hubmitteln 7 im Innenraum des Schubladenkorpus 9 Zusammenwirken, können Servomotoren 7, insbesondere jeweils eine Servoscheibe 71' und eine Schraube 72' mit Lagerhülse umfassend gewählt werden. In einer weiteren Ausführungsform könne als Hubmittel 7 auch Hubmagnete gewählt sein, die ebenfalls im Deckelinneren bzw. in der mindestens einen Aussparung A im Deckel 2 integriert sind.

Der Geschlossenstellungssensor 6 und vorzugsweise der Näherungssensor 18 sind am oder im Deckel 2, bevorzugt im Deckelinneren bzw. in der mindestens einen Aussparung A, einer Frontseite der Schublade 3 zugewandt angeordnet. Der Näherungssensor 18 ist bevorzugt als kapazitiver Sensor ausgebildet. Der Geschlossenstellungssensor 6 ist bevorzugt als Induktionssensor oder Mikroschalter ausgebildet.

Zusätzlich zu dem Näherungssensor 18 bzw. Geschlossenstellungssensor 6 können mindestens ein Beschleunigungssensor oder ein Lagesensors verwendet werden. Diese sind an verschiedenen Positionen am Deckel 2 oder der Schublade 3 anordbar. Wenn ein Benutzer versucht die evakuiert und geschlossene Schublade 3 aufzuziehen, wird dies durch den Beschleunigungssensor oder Lagesensor erkannt, was die Steuerung 8 registriert und eine Belüftung des Schubladeninnenraums auslöst. Je nach Konstruktion der Schublade 3, der Hubmittel 7 oder Dichtmitteln 24, wird nach Auslösung und Belüftung ein Hub der Schublade 3 bzw. die Freistellung der Dichtmittel 24 ermöglicht. Danach kann die Schublade 3 relativ zum Deckel 2 linear verfahren werden. Wenn die Schublade 3 nach Entnahme eines Gegenstandes zurück in die Geschlossenstellung gefahren wird, erkennt dies der Geschlossenstellungssensor 6, wonach die Evakuierung gestartet wird.

Es sind verschiedene Ausführungsformen der hier vorgestellten Vakuumschubladeneinrichtung 0 vorstellbar, wobei unterschiedlich gestaltete Schubladen 3 mit den zur Evakuierung nötigen Mitteln ausgestattet werden können.

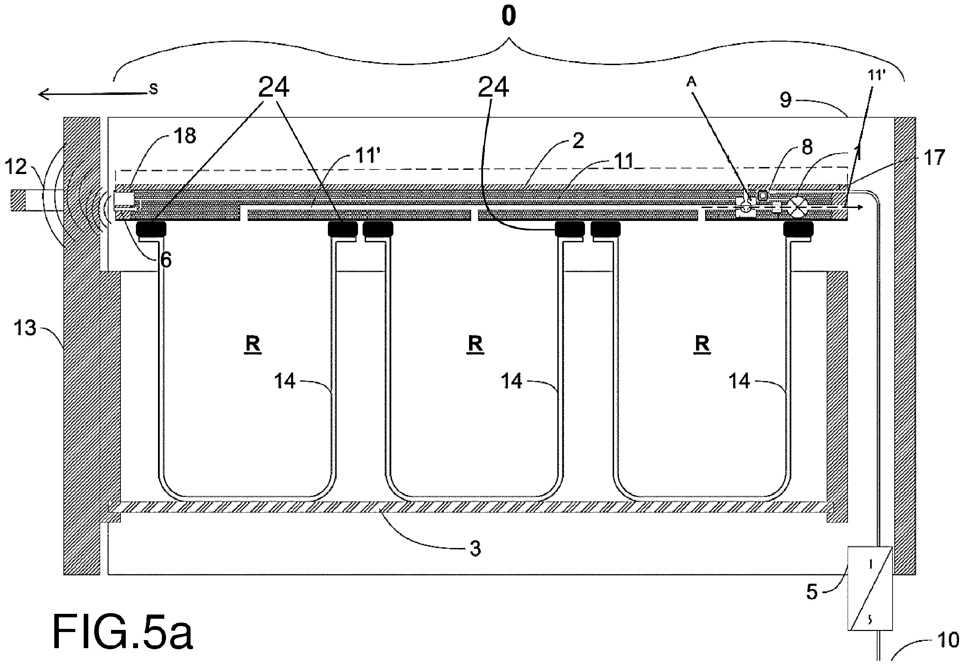

In Figur 5a ist eine Schublade 3 in einer Geschlossenstellung gezeigt, wobei in dieser Ausführungsform des Deckels 2 Hubmittel 7 nicht unbedingt nötig sind. Hier sind an der, der Schublade 3 zugewandten Deckelfläche aufpumpbare Dichtmittel 24 angeordnet. Die aufpumpbaren Dichtmittel 24 ragen von der Deckelfläche weg in Richtung Schublade 3 und sind hier aufgepumpt. Entsprechend wird der Schubladeninnenraum R bzw. die Innenräume eingestellter Gastronormbehälter 14 luftdicht verschlossen. Mittel zum Aufpumpen der Dichtmittel 24 bzw. zum Ablassen der Luft aus den Dichtmitteln 24 sind hier nicht dargestellt. Im Wesentlichen ist aber mindestens ein Dichtmittelventil und eine Pumpe nötig, welche gesteuert von der Steuerung 8 gezielt betätigbar sind. In einer vorteilhaften Ausführungsform ist die Pumpe für die Dichtmittel 24 die Pumpe 1 für die Evakuierung. Durch derartige Dichtmittel 24, deren Höhe verstellbar ist, kann auf aufwändigere Hubmittel 7 verzichtet werden. Die Belüftung und Evakuierung der Schublade 3 läuft ansonsten wie oben beschrieben ab. Durch den Luftkanal 11' wird Luft aus den Schubladeninnenraum R abgepumpt und durch das Ventil 4 wieder zugeführt, um die Schublade 3 aus dem Schubladenkorpus 9 herausziehen zu können.

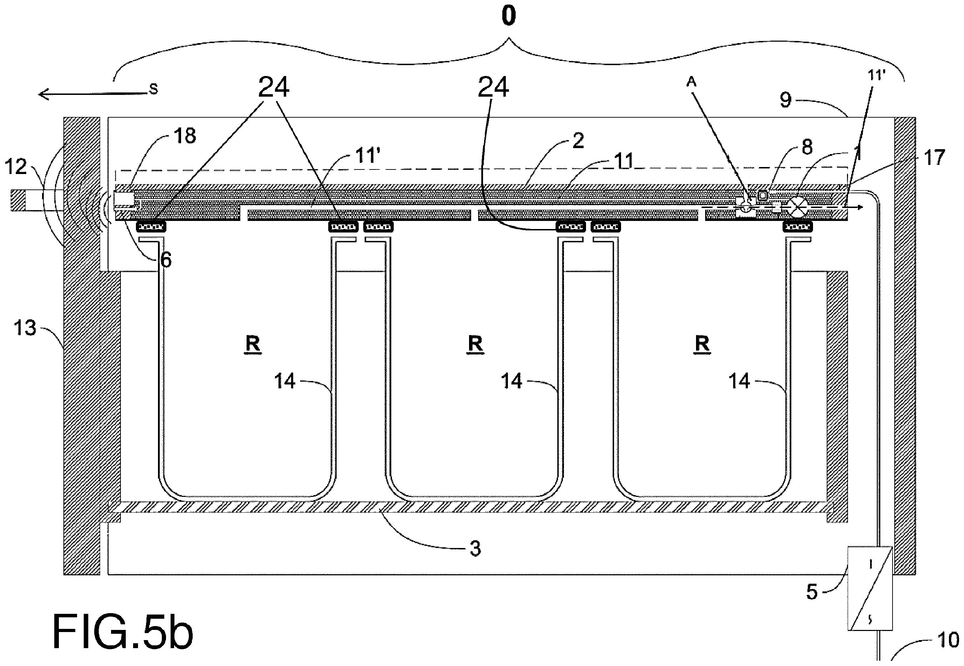

Figur 5b zeigt belüftete Schubladeninnenräume R, wobei die Luft aus den Dichtmitteln 24 herausgelassen ist und ein Spalt zwischen den Dichtmitteln 24 und den Flanschen der Behälter 14 ausgebildet ist. Der Deckel 2 hat in dieser Offenstellung keinen Kontakt mehr zu den Behältern 14 oder der Schublade 3. Wie bekannt wird die Schublade 3 nun in Schubbewegungsrichtung S aufgezogen, sodass Lebensmittel oder Behälter 14 entnommen oder zugefügt werden können. Anschließend wird die Schublade 3 wieder linear verschoben und damit im Schubladenkorpus 9 versenkt. Durch die Steuerung 8 kann dann das Signal zum Aufpumpen der Dichtmittel 24 gegeben werden, welche sich bei ausreichend hohem Luftdruck in den Dichtmitteln 24 auf die Ränder des Schubladeninneraums R pressen. Sobald die Dichtung erfolgt ist, steuert die Steuerung 8 die Evakuierung mittels Pumpe 1 über den Luftkanal 11'.

Als Dichtmittel 24 können schlauchartige Profile gewählt werden, welche auf der Deckelinnenfläche aufgeklebt oder angeschweißt sind. Soll nur ein Schubladeninnenraum R abgedichtet werden, sind die Dichtmittel 24 den Rand der Schublade 3 überdeckend an der Deckelinnenfläche angeordnet. Wenn mehrere Gastrobehälter den Schubladeninnenraum R bilden, werden die Dichtmittel 24 derart geformt, dass die Ränder der Gastrobehälter von den Dichtmitteln 24 abgedeckt werden. Durch die Aufpumpbarkeit der Dichtmittel 24 wird eine Höhenverstellung der Dichtmittel 24 erreicht. Die Dichtmittel 24 ragen im aufgepumpten Zustand vorteilhafterweise zwischen 5 und 10 mm weiter von der Deckelinnenfläche weg, als im nicht aufgepumpten Zustand.

Die Dichtmittel 24 können aus unterschiedlichen Folien oder Membranmaterialien hergestellt sein, welche elastisch und thermoplastisch sein sollten. Bevorzugt sollten die Dichtmittel 24 lebensmitteltauglich ausgestaltet sein, damit diese problemlos in Küchen einsetzbar sind.

Eine Reduktion des Sauerstoffgehaltes durch Erzeugung des Unterdruckes bzw. die Evakuierung hemmt das Wachstum von Bakterien. Als zusätzliche Ausführungsvariante ist die Bestrahlung der Lebensmittel im Behälter 14 bzw. Schubladeninnenraum R mit ultraviolettem Licht im Wellenlängenbereich von 254-280nm vorteilhaft. Dieses ultraviolette Licht wird durch eine ortsfeste Anordnung mindestens einer UVC-LED bevorzugt am Deckel 2 mit zugehöriger Verkabelung an die Steuerung 8 erreicht. Die Steuerung 8 sorgt für eine dauerhafte oder zeitlich gesteuerte Bestrahlung mit UVC-Licht durch entsprechende Betätigung der mindestens einen UVC-LED, während der Schubladeninnenraum R evakuiert ist. Die Strahlung zerstört aktiv die DNA der Bakterien und kann daher nicht nur das Wachstum hemmen, sondern auch die Bakterien abtöten. Besonders bevorzugt sind am Deckel 2 auf Höhe jedes Schubladeninnenraum R verteilt, jeweils mindestens eine UVC-LED pro Schubladeninnenraum R angeordnet. Durch das Verschließen des Schubladeninnenraums R bzw. der Behälter 14 erhöht sich die relative Luftfeuchtigkeit, weil die Lebensmittel Feuchtigkeit abgeben. Der Schubladeninnenraum R bzw. die Behälter 14 können mit hygroskopischem Material ausgestattet werden, sodass Feuchtigkeit aus der Raumluft entnommen wird.

Um einen zu starken Anstieg der relativen Luftfeuchtigkeit auf Dauer zu unterbinden, kann die Steuerung 8 derart programmiert sein, dass in regelmäßigen Zeitintervallen ein Luftaustausch stattfindet. Bei Verwendung zusätzlicher Feuchtigkeitssensoren in den Behältern 14 oder im Schubladeninnenraum R, welche ebenfalls an die Steuerung 8 angeschlossen sind, kann die aktuelle relative Luftfeuchtigkeit gemessen und je nach Messwert ein Luftaustausch gesteuert durchgeführt werden. Entsprechende Feuchtigkeitssensoren und die Anbindung an die Steuerung 8 sind dem Fachmann bekannt. Dabei ist die Platzierung der Feuchtigkeitssensoren wichtig, sodass korrekte Werte ermittelt werden können.

### Bezugszeichenliste

0 Vakuumschubladeneinrichtung
1 Pumpe/Luftpumpe
11' Luftkanal/Belüftungskanal
2 Deckel
21' luftdichte Membran
22' Schaumstofflage
23' Lufteinlassöffnung
24 Dichtmittel
3 Schublade
31' Schubladenauszug
4 Ventil/Elektromagnetventil
5 Netzgerät
6 Geschlossenstellungssensor
7 Hubmittel/Servomotor
71' Servoscheibe
72' Schraube mit Lagerhülse
8 Steuerung
9 Schubladenkorpus
10 Stromkabel
11 Steuerkabel
12 Griff
13 Frontblende
14 Behälter
15 Bedienschalter/An- und Ausschalter
16 Drucksensor
17 Rahmen
18 Näherungssensor
R Schubladeninnenraum/ein Innenraum oder der Innenraum eingestellter Gastronormbehälter 14
S Schubbewegungsrichtung
H Hubrichtung
A Aussparung

## Patentansprüche

1. Deckel (2) zum Einbau in einen Schubladenkorpus (9), welcher mit einer linear bewegbare Schublade (3) wirkverbindbar anordbar ist, wobei der Deckel (2) Evakuiermittel zur Evakuierung mindestens eines Schubladeninnenraums (R) aufweist, sodass der mindestens eine Schubladeninnenraum (R) bei in einer Geschlossenstellung befindlichen Schublade (3) evakuiert und vor Öffnung der Schublade (3) belüftbar ist, wobei der Deckel (2) luftdicht ausgestaltet ist, und die Evakuiermittel in Form einer Steuerung (8), einer Pumpe (1) und eines Ventils (4) im Deckel (2) befestigt sind und der Deckel (2) mindestens einen in das Deckelinnere führenden Luftkanal (11') aufweist, wobei der Luftkanal (11') derart mit den Evakuiermitteln wirkverbunden ist, dass bei Auflage des Deckels (2) auf der Schublade (3) Luft aus dem mindestens einen Schubladeninnenraum (R) durch den Luftkanal (11') aus dem mindestens einen Schubladeninnenraum (R) und dem Deckelinneren abpumpbar ist, **dadurch gekennzeichnet, daß** ein Geschlossenstellungssensor (6), am oder im Deckel (2) einer Frontseite der Schublade (3) zugewandt angeordnet und mit der Steuerung (8) verbunden ist, sodass die Steuerung (8) bei Erreichen der Geschlossenstellung der Schublade (3) die Evakuiermittel startet, vorzugsweise wobei der Geschlossenstellungssensor (6) als Induktionssensor oder Mikroschalter ausgebildet ist.

2. Deckel (2) nach Anspruch 1, wobei die zur Schublade (3) hin weisende Seite des Deckels (2) mit einer luftdichten Membran (21') bedeckt ist, welche mit mindestens einer, die Membran (21') vollständig querenden Lufteinlassöffnung (23') versehen ist, wodurch eine Verbindung zwischen Lufteinlassöffnung (23') und dem Luftkanal (11') geschaffen ist.

3. Deckel (2) nach Anspruch 2, wobei in das Deckelinnere bzw. in mindestens eine Aussparung (A) des profilierten Deckels (2) eine Schaumstofflage (22') eingelegt ist, welche mit der luftdichten Membran (21') auf ihrer zum mindestens einen Schubladeninnenraum (R) weisenden Seite derart verbunden ist, dass Luft nur durch die mindestens eine Lufteinlassöffnung (23'), durch die Schaumstofflage (22') und bis durch den Luftkanal (11') aus dem vom Deckel (2) luftdicht verschlossenen mindestens einen Schubladeninnenraum (R) auspumpbar ist.

4. Deckel (2) nach Anspruch 1, wobei aufpumpbare Dichtmittel (24) am Deckel (2) auf der zur Schublade (3) hin weisenden Deckelfläche fixiert angeordnet sind und durch Luftzufuhr die Aufbauhöhe der Dichtmittel (24) variierbar ist.

5. Deckel (2) nach einem der vorhergehenden Ansprüche, wobei ein Schubladenkorpus (9) und Hubmittel (7) vorgesehen sind, und wobei die Hubmittel (7) am Schubladenkorpus (9) und mindestens teilweise im Deckelinneren wirkverbunden angeordnet und mit der Steuerung (8) verbunden sind, sodass der Deckel (2) in einer Hubrichtung (H) senkrecht zur Schubbewegungsrichtung (S) der Schublade (3) relativ zum Schubladenkorpus (9) ausgerichtet heb- und senkbar befestigt ist.

6. Deckel (2) nach Anspruch 5, wobei
- die im Deckelinneren bzw. in mindestens einer Aussparung (A) im Deckel (2) integrierten Hubmittel Servomotoren (7) sind, vorzugsweise wobei jeder Servomotor (7) eine Servoscheibe (71') und eine Schraube (72') mit Lagerhülse umfasst, oder
- die im Deckelinneren bzw. in mindestens einer Aussparung (A) im Deckel (2) integrierten Hubmittel (7) Hubmagnete sind.

7. Deckel (2) nach einem der vorhergehenden Ansprüche, wobei ein Näherungssensor (18) am oder im Deckel (2), bevorzugt im Deckelinneren bzw. in mindestens einer Aussparung (A), einer Frontseite der Schublade (3) zugewandt angeordnet ist und mit der Steuerung (8) verbunden ist, sodass eine Berührung der Schublade (3) mittels Näherungssensor (18) erkennbar ist und das Vakuum im mindestens einen Schubladeninnenraum (R) gezielt steuerbar erzeugbar bzw. auflösbar ist, vorzugsweise wobei der Näherungssensor (18) als kapazitiver Sensor oder als Beschleunigungssensor oder Lagesensor ausgebildet ist.

8. Deckel (2) nach einem der vorhergehenden Ansprüche, wobei der Deckel (2) aus einer formstabilen MDF-Platte mit luftdichter Beschichtung, insbesondere in Form eines Lackes ausgebildet ist.

9. Deckel (2) nach einem der vorhergehenden Ansprüche, wobei am Deckel (2) mindestens eine UVC-LED angeordnet ist und mit der Steuerung (8) verbunden ist.

10. Verwendung einer Schublade (3) mit einem Schubladeninnenraum (R) und einem Deckel (2) nach einem der Ansprüche 1 bis 9, eingebaut in einen Schubladenkorpus (9) zur luftdichten Lagerung von Lebensmitteln innerhalb des Schubladeninnenraums (R), wobei Evakuiermittel in Form einer Steuerung (8), einer Pumpe (1) und eines Ventils (4) an oder im Deckel (2) angeordnet sind und nach Auslösung eines Näherungssensor (18) als kapazitiver Sensor, Beschleunigungssensor oder Lagesensor Luft kontrolliert durch einen den Deckel (2) teilweise querenden Luftkanal (11') aus dem Schubladeninnenraum (R) abpumpbar ist, wobei der Deckel (2) oder Dichtmittel (24) von einer Offenstellung in eine Geschlossenstellung relativ zur Schublade (3) mittels der Steuerung (8) bringbar sind.

11. Vakuumschubladeneinrichtung (0), umfassend eine in eine Schubbewegungsrichtung (S) linear bewegbare Schublade (3) mit mindestens einem Schubladeninnenraum (R), und einen Deckel (2) nach einem der Ansprüche 1 bis 9, wobei der mindestens eine Schubladeninnenraum (R) mittels des Deckels (2) in einer Hubbewegung in einer Hubrichtung (H) senkrecht zur Schubbewegungsrichtung (S) verlaufend verschliessbar ist.

12. Vakuumschubladeneinrichtung (0) nach Anspruch 11, wobei die Schublade (3)
- mehrere Gastronormbehälter aufnimmt, deren Innenräume den Schubladeninnenraum (R) bilden und der Deckel (2) auf den Rändern der Gastronormbehälter die Innenräume der Gastronormbehälter luftdicht dichtend hub- und senkbar wirkverbindbar ist, und/oder
- die Schublade (3) mittels eines Schubladenauszugs/Führungsprofils (31') linear aus- und einziehbar in einem Schubladenkorpus (9) gelagert ist.

13. Vakuumschubladeneinrichtung (0) nach Anspruch 11 oder 12, wobei mindestens ein Feuchtigkeitssensor in einem Behälter (14) und/oder im Schubladeninnenraum (R) angeordnet ist und mit der Steuerung (8) wirkverbunden ist.

14. Umrüstverfahren eines Schubladenkorpus (9) mit einer Schublade (3), wobei die Schublade (3) linear mittels eines Schubladenauszugs (31') in einer Schubbewegungsrichtung (S) bewegbar gelagert ist, zu einer Vakuumschubladeneinrichtung (0) nach einem der Ansprüche 11 bis 13, **gekennzeichnet durch**,
- Entnahme der Schublade (3)
- Anordnung von Hubmitteln (7) im Inneren des Schubladenkorpus (9),
- Verbinden von Hubmitteln (7) eines Deckels (2) gemäß einem der Patentansprüche 1 bis 9 mit den Hubmitteln (7) im Schubladenkorpus (9) und Verbindung mit der Steuerung (8), wodurch der Deckel (2) heb- und senkbar im Schubladenkorpus (9) befestigt wird,
und/oder
Anordnung von höhenverstellbaren Dichtmitteln (24) an der, der Schublade (3) zugewandten Deckelfläche und Verbindung mit der Steuerung (8) und einer Pumpe (1), bevor
- eine anschließende Verlegung von elektrischen Leitungen bzw. einem Netzgerät (5) zur Hausspannungsversorgung stattfindet und
- die Schublade (3) wieder im Schubladenkorpus (9) gelagert wird.

## Claims

1. A cover (2), installable in a drawer body (9) and arrangeable so as to be operatively connectable to a linearly movable drawer (3), wherein the cover (2) comprises an evacuation system for evacuating at least one drawer interior (R), so that the at least one drawer interior (R) can be evacuated when the drawer (3) is in a closed position and ventilated before the drawer (3) is opened, wherein the cover (2) is designed to be airtight and the evacuation system is secured in the cover (2) in the form of a controller (8), a pump (1) and a valve (4), and the cover (2) has at least one air channel (11') leading into the inside of the cover, wherein the air channel (11') is operatively connected to the evacuation system such that, when the cover (2) is placed on the drawer (3), air from the at least one drawer interior (R) is pumpable out of the at least one drawer interior (R) and the inside of the cover through the air channel (11'), **characterized in that** a closed position sensor (6) facing a front side of the drawer (3) is arranged on or in the cover (2) and connected to the controller (8) so that the controller (8) starts the evacuation system when the drawer (3) reaches the closed position, preferably wherein the closed position sensor (6) is designed as an induction sensor or microswitch.

2. The cover (2) according to claim 1, wherein the side of the cover (2) facing the drawer (3) is covered with an airtight membrane (21'), which is provided with at least one air inlet opening (23') completely crossing the membrane (21'), such that a connection between the air inlet opening (23') and the air channel (11') is created.

3. The cover (2) according to claim 2, wherein a foam layer (22') is inserted in the inside of the cover or, respectively, the at least one recess (A) of the profiled cover (2), the foam layer (22') connected to the airtight membrane (21') on a side facing the at least one drawer interior (R) such that air can only be pumped out of the at least one drawer interior (R), which is closed in an airtight manner by the cover (2), through the at least one air inlet opening (23'), through the foam layer (22') and through the air channel (11').

4. The cover (2) according to claim 1, wherein inflatable sealing means (24) on the cover (2) are fixedly arranged on the cover surface facing towards the drawer (3) and the structural height of the sealing means (24) can be varied by air supply.

5. The cover (2) according to one of the preceding claims, wherein a drawer body (9) and lifting means (7) are provided, and wherein the lifting means (7) are arranged operatively connectably on the drawer body (9) and at least partially in the cover interior and connected to the controller (8) so that the cover (2) is secured such that the cover (2) can be lifted and lowered in an aligned manner relative to the drawer body (9) in a lifting direction (H) perpendicular to the drawer movement direction (S) of the drawer (3).

6. The cover (2) according to claim 5, wherein
- the lifting means (7) integrated in the inside of the cover or, respectively, the at least one recess (A) of the cover (2) are servomotors (7), preferably wherein each servomotor (7) comprises a servo disc (71') and a screw (72') with a bearing sleeve, or
- the lifting means (7) integrated in the inside of the cover or, respectively, the at least one recess (A) of the cover (2) are lifting magnets.

7. The cover (2) according to one of the preceding claims, wherein a proximity sensor (18) facing a front side of the drawer (3) is arranged on or in the cover (2), preferably inside the cover or, respectively, in at least one recess (A), and is connected to the controller (8), so that a contact of the drawer (3) can be detected by a proximity sensor (18) and the vacuum in the at least one drawer interior (R) can be generated or, respectively, relieved in a selectively controllable manner, preferably wherein the proximity sensor (18) is designed as capacitive sensor or as an acceleration sensor or a position sensor.

8. The cover (2) according to one of the preceding claims, wherein the cover (2) is designed from a dimensionally stable MDF board with an airtight coating, in particular in the form of a lacquer.

9. The cover (2) according to one of the preceding claims, wherein at least one UVC LED is arranged on the cover (2) and is connected to the controller (8).

10. Use of a drawer (3) comprising a drawer interior (R) and a cover (2) according to one of claims 1 to 9, installed in a drawer body (9) for storing foodstuffs within the drawer interior (R) in an airtight manner, wherein an evacuation system in the form of a controller (8), a pump (1) and a valve (4) are arranged on or in the cover (2) and, after triggering a proximity sensor (18) as a capacitive sensor, an acceleration sensor or a position sensor, air can be pumped out of the drawer interior (R) in a controlled manner through an air channel (11') partially crossing the cover (2), wherein the cover (2) or the sealing means (24) can be brought from an open position into a closed position relative to the drawer (3) by the controller (8).

11. A vacuum drawer device (0), comprising a drawer (3) which can be moved linearly in a drawer movement direction (8) and has at least one drawer interior (R), and a cover (2) according to one of claims 1 to 9, wherein the at least one drawer interior (R) can be closed by means of a cover (2) with a lifting movement in a lifting direction (H) running perpendicular to the drawer movement direction (8).

12. The vacuum drawer device (0) according to claim 11, wherein the drawer (3)
- accommodates a plurality of Gastronorm containers, the interiors of which form the drawer interior (R), and the cover (2) can be lifted and lowered and operatively connected on the edges of the Gastronorm containers so as to seal the interiors of the Gastronorm containers in an airtight manner, and/or
- is mounted so as to be linearly pulled out and retracted by a drawer pullout/guiding profile (31') into a drawer body (9).

13. The vacuum drawer device (0) according to one of claims 11 or 12, wherein at least one humidity sensor is arranged in a container (14) and/or in the drawer interior (R) and is operatively connected to the controller (8).

14. A method for converting a drawer body (9) with a drawer (3), wherein the drawer (3) is mounted so as to be linearly movable in a drawer movement direction (8) by a drawer pullout (31'), into the vacuum drawer device (0) according to one of claims 11 to 13, **characterized by**
- removing the drawer (3)
- arranging drawer lifting means (7) inside the drawer body (9),
- connecting the lifting means (7) of a cover (2) according to one of claims 1 to 9 to the drawer lifting means (7) in the drawer body (9) and connecting to the controller (8), whereby the cover (2) is secured in the drawer body (9) such that it can be lifted and lowered,
and/or
arranging height-adjustable sealing means (24) on the cover surface facing the drawer (3) and connecting to the controller (8) and the pump (1), wherein
- the connecting step occurs before laying electrical lines or, respectively, a power supply unit (5) for the main power supply takes place and
- the drawer (3) is stored again in the drawer body (9).

## Revendications

1. Couvercle (2) pour le montage dans un corps de tiroir (9) qui peut être agencé de manière à pouvoir être relié activement à un tiroir (3) mobile linéairement, dans lequel le couvercle (2) présente des moyens d'évacuation pour l'évacuation au moins d'un espace intérieur de tiroir (R) de sorte que l'au moins un espace intérieur de tiroir (R) soit évacué en cas de tiroir (3) se trouvant dans une position fermée et puisse être ventilé avant l'ouverture du tiroir (3), dans lequel le couvercle (2) est configuré de manière étanche à l'air, et les moyens d'évacuation sous la forme d'une commande (8), d'une pompe (1) et d'une soupape (4) sont fixés dans le couvercle (2) et le couvercle (2) présente au moins un canal d'air (11') menant à l'intérieur du couvercle, dans lequel le canal d'air (11') est activement relié aux moyens d'évacuation de telle manière que lors de l'appui du couvercle (2) sur le tiroir (3), de l'air de l'au moins un espace intérieur de tiroir (R) puisse être pompé par le canal d'air (11') de l'au moins un espace intérieur de tiroir (R) et de l'intérieur du couvercle, **caractérisé en ce qu'**
un capteur de position fermée (6) est agencé de manière tournée au niveau ou dans le couvercle (2) vers un côté frontal du tiroir (3) et est relié à la commande (8) de sorte que la commande (8) lance les moyens d'évacuation lors de l'atteinte de la position fermée du tiroir (3), de préférence dans lequel le capteur de position fermée (6) est réalisé comme capteur d'induction ou microcommutateur.

2. Couvercle (2) selon la revendication 1, dans lequel le côté du couvercle (2) tourné vers le tiroir (3) est recouvert d'une membrane étanche à l'air (21') qui est pourvue d'au moins une ouverture d'entrée d'air (23') traversant complètement la membrane (21'), par laquelle une liaison entre l'ouverture d'entrée d'air (23') et le canal d'air (11') est créée.

3. Couvercle (2) selon la revendication 2, dans lequel une couche de mousse (22') est introduite à l'intérieur du couvercle ou dans au moins un évidement (A) du couvercle (2) profilé, laquelle est reliée à la membrane étanche à l'air (21') sur son côté tourné vers au moins un espace intérieur de tiroir (R) de telle manière que de l'air puisse être pompé seulement par l'au moins une ouverture d'entrée d'air (23'), par la couche de mousse (22') et jusqu'à travers le canal d'air (11') de l'au moins un espace intérieur de tiroir (R) fermé de manière étanche à l'air par le couvercle (2).

4. Couvercle (2) selon la revendication 1, dans lequel des moyens étanches (24) pompables sont agencés fixés au couvercle (2) sur la surface de couvercle tournée vers le tiroir (3) et la hauteur de montage des moyens étanches (24) est variable par apport d'air.

5. Couvercle (2) selon l'une quelconque des revendications précédentes, dans lequel un côté de tiroir (9) et des moyens de levage (7) sont prévus, et dans lequel les moyens de levage (7) sont agencés de manière à être reliés activement au niveau du corps de tiroir (9) et au moins partiellement à l'intérieur du couvercle et sont reliés à la commande (8) de sorte que le couvercle (2) soit fixé de manière levable et abaissable en étant orienté dans un sens de levage (H) perpendiculairement au sens de déplacement de poussée (S) du tiroir (3) par rapport au corps de tiroir (9).

6. Couvercle (2) selon la revendication 5, dans lequel
- les moyens de levage intégrés à l'intérieur du couvercle ou dans au moins un évidement (A) dans le couvercle (2) sont des servomoteurs (7), de préférence dans lequel chaque servomoteur (7) comprend un servodisque (71') et une vis (72') avec une douille de palier, ou
- les moyens de levage (7) intégrés à l'intérieur du couvercle ou dans au moins un évidement (A) dans le couvercle (2) sont des aimants de levage.

7. Couvercle (2) selon l'une quelconque des revendications précédentes, dans lequel un capteur de proximité (18) est agencé de manière tournée vers un côté frontal du tiroir (3), au niveau ou dans le couvercle (2), de préférence à l'intérieur du couvercle ou dans au moins un évidement (A) et est relié à la commande (8) de sorte qu'un contact du tiroir (3) puisse être reconnu au moyen du capteur de proximité (18) et le vide puisse être généré ou dissout dans au moins un espace intérieur de tiroir (R) de manière commandable et ciblée, de préférence dans lequel le capteur de proximité (18) est réalisé comme capteur capacitif ou comme capteur d'accélération ou capteur de position.

8. Couvercle (2) selon l'une quelconque des revendications précédentes, dans lequel le couvercle (2) est réalisé en une plaque de MDF de forme stable avec un revêtement étanche à l'air, en particulier sous la forme d'un vernis.

9. Couvercle (2) selon l'une quelconque des revendications précédentes, dans lequel au moins une DEL UVC est agencée au niveau du couvercle (2) et est reliée à la commande (8).

10. Utilisation d'un tiroir (3) avec un espace intérieur de tiroir (R) et un couvercle (2) selon l'une quelconque des revendications 1 à 9, installé dans un corps de tiroir (9) pour le logement étanche à l'air d'aliments dans l'espace intérieur de tiroir (R), dans lequel des moyens d'évacuation sous la forme d'une commande (8), d'une pompe (1) et d'une soupape (4) sont agencés au niveau ou dans le couvercle (2) et après le déclenchement d'un capteur de proximité (18) comme capteur capacitif, capteur d'accélération ou capteur de position, de l'air peut être pompé de manière contrôlée par un canal d'air (11') traversant partiellement le couvercle (2) de l'espace intérieur de tiroir (R), dans lequel le couvercle (2) ou des moyens étanches (24) peuvent être amenés d'une position ouverte dans une position fermée par rapport au tiroir (3) au moyen de la commande (8).

11. Dispositif de tiroir à vide (0) comprenant un tiroir (3) mobile linéairement dans un sens de déplacement de poussée (S) avec au moins un espace intérieur de tiroir (R), et un couvercle (2) selon l'une quelconque des revendications 1 à 9, dans lequel l'au moins un espace intérieur de tiroir (R) est refermable s'étendant au moyen du couvercle (2) dans un mouvement de levage dans un sens de levage (H) perpendiculairement au sens de déplacement de poussée (S).

12. Dispositif de tiroir à vide (0) selon la revendication 11, dans lequel le tiroir (3)
- reçoit plusieurs récipients Gastronorm, dont les espaces intérieurs forment l'espace intérieur de tiroir (R) et le couvercle (2) peut être activement relié de manière levable et abaissable, de manière étanche en rendant étanche les espaces intérieurs des récipients Gastronorm sur les bords des récipients Gastronorm, et/ou
- le tiroir (3) est logé de manière sortable et entrable linéairement dans un corps de tiroir (9) au moyen d'une rallonge de tiroir/d'un profil de guidage (31').

13. Dispositif de tiroir à vide (0) selon la revendication 11 ou 12, dans lequel au moins un capteur d'humidité est agencé dans un récipient (14) et/ou dans l'espace intérieur de tiroir (R) et est activement relié à la commande (8).

14. Procédé de transformation d'un corps de tiroir (9) avec un tiroir (3), dans lequel le tiroir (3) est logé de manière mobile linéairement au moyen d'une rallonge de tiroir (31') dans un sens de déplacement de poussée (S), en un dispositif de tiroir à vide (0) selon l'une quelconque des revendications 11 à 13, **caractérisé par**
- le retrait du tiroir (3),
- l'agencement de moyens de levage (7) à l'intérieur du corps de tiroir (9),
- la liaison de moyens de levage (7) d'un couvercle (2) selon l'une quelconque des revendications 1 à 9 avec les moyens de levage (7) dans le corps de tiroir (9) et la liaison avec la commande (8), par quoi le couvercle (2) est fixé de manière levable et abaissable dans le corps de tiroir (9),
et/ou
l'agencement de moyens étanches (24) réglables en hauteur au niveau de la surface de couvercle tournée vers le tiroir (3) et la liaison avec la commande (8) et une pompe (1), avant que
- une pose suivante de câbles électriques ou d'un bloc d'alimentation (5) pour l'alimentation électrique domestique n'ait lieu et
- le tiroir (3) ne soit de nouveau logé dans le corps de tiroir (9).
